(19) **Europäisches Patentamt**

**European Patent Office**

**Office européen des brevets**

(11) **EP 1 398 288 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
**B65H 27/00** (2006.01)

(21) Anmeldenummer: **02020757.7**

(22) Anmeldetag: **16.09.2002**

(54) **Vorrichtung zum Abzug von Werkstoffbahnen**

Device for paying out webs

Dispositif pour le déroulage de bandes

(84) Benannte Vertragsstaaten:
**AT BE BG CH CY CZ DE DK EE ES FI FR GB GR IE IT LI LU MC NL PT SE SK TR**
Benannte Erstreckungsstaaten:
**MK SI**

(43) Veröffentlichungstag der Anmeldung:
**17.03.2004 Patentblatt 2004/12**

(73) Patentinhaber: **Reifenhäuser GmbH & Co. KG Maschinenfabrik**
**53839 Troisdorf (DE)**

(72) Erfinder:
• **Meyer, Helmut**
**53842 Troisdorf (DE)**

• **Böhm, Andreas**
**53842 Troisdorf (DE)**

(74) Vertreter: **Rohmann, Michael et al**
**Patentanwälte**
**Andrejewski, Honke & Sozien**
**Theaterplatz 3**
**45127 Essen (DE)**

(56) Entgegenhaltungen:
**DE-A- 2 832 457        DE-A- 2 908 789**
**DE-A- 4 125 620        DE-A- 4 408 863**
**US-A- 3 097 590**

EP 1 398 288 B1

**Beschreibung**

Die Erfindung betrifft eine Vorrichtung zum Abzug von Werkstoffbahnen, insbesondere von Kunststoffbahnen, mit einer angetriebenen Führungswalze und einer nicht angetriebenen, mit vorgegebener Anpresskraft an die Führungswalze angedrückten Andrückwalze, wobei die Andrückwalze auf zumindest zwei Wälzlagern gelagert ist. - Die Werkstoffbahn, insbesondere Kunststofffolienbahn, wird zwischen Führungswalze und daran angedrückter Andrückwalze hindurchgeführt und durch die angetriebene Führungswalze gleichsam abgezogen.

Bei einer der aus der Praxis bekannten Vorrichtungen der eingangs genannten Art sind die Wälzlager außen an den Andrückwalzenenden und normalerweise auf den Andrückwalzenzapfen angeordnet. Die Andrückwalze erfährt im Betrieb in der Regel eine relativ starke Durchbiegung. Um diese Durchbiegung auszugleichen bzw. zu minimieren werden ballige Andrückwalzen eingesetzt, die bezüglich ihrer Längserstreckung in der Walzenmitte einen größeren Außenumfang haben als an den Andrückwalzenstirnenden. Solche balligen Andrückwalzen müssen normalerweise in aufwendiger Weise geschliffen werden. Diese bekannten Andrückwalzen zeichnen sich aber noch durch einen anderen beachtlichen Nachteil aus. Aufgrund der Balligkeit ist die Umfangsgeschwindigkeit der Andrückwalze in der Mitte höher als an den Andrückwalzenenden. Dadurch entsteht ein sogenannter Differenzialschlupf und es resultiert eine Stauchung der durchgeleiteten Werkstoffbahn, insbesondere Kunststofffolie, so dass sich störende Längsfalten in der Werkstoffbahn bilden.

Insoweit ist die aus der Praxis bekannte Vorrichtung verbesserungsbedürftig.

Weitere Walzen, die als Andrückwalzen verwendet werden können, werden z.B. in der DE 41 25 620-A1, die als nächster Stand der Technik angesehen wird. Offenbart, so wie auch in der DE 4 408 863 A1, der DE 2 908 789 und der DE 28 32 457.

Der Erfindung liegt das technische Problem zugrunde, eine Vorrichtung der eingangs genannten Art anzugeben, die auf einfache Weise herstellbar ist und einen einfachen Aufbau aufweist und mit der nichtsdestoweniger Unregelmäßigkeiten und Störstellen in der abgezogenen Werkstoffbahn effektiv vermieden werden können.

Zur Lösung dieses technischen Problems lehrt die Erfindung eine Vorrichtung der eingangs genannten Art, welche dadurch gekennzeichnet ist, dass die beiden Wälzlager mit vorgegebenem Abstand a von den Andrückwalzenstirnenden angeordnet sind mit der Maßgabe angeordnet, dass die Durchbiegungen $f_1$ an den Andrückwalzenstirnenden gleich der Durchbiegung $f_0$ in der Andrückwalzenmitte ist. Andrückwalzenmitte bezieht sich hier auf die Mitte bezüglich der Längsausdehnung der Andrückwalze. Als Wälzlager wird zweckmäßigerweise ein Kugellager eingesetzt. Vorzugsweise handelt es sich bei den beiden Wälzlagern um Pendelkugellager. - Zweckmäßigerweise sind die beiden Wälzlager mit einem Abstand a zu den Andrückwalzenstirnenden angeordnet, welcher Abstand a sich aus den Biegegleichungen für eine Andrückwalze auf zwei Lagern unter der Bedingung ergibt, dass die Durchbiegungen $f_1$ an den Andrückwalzenstirnenden gleich der Durchbiegung $f_0$ in der Andrückwalzenmitte ist. Vorzugsweise werden die Durchbiegungen $f_1$ an den Andrückwalzenstirnenden jeweils aus der Formel

$$f_1 = \frac{F \cdot l^3}{24 \cdot E \cdot I} \cdot \frac{a}{\ell}\left(3\frac{a^3}{\ell^3} + 6\frac{a^2}{\ell^2} - 1\right)$$

berechnet und die Durchbiegung $f_0$ in der Andrückwalzenmitte wird bevorzugt aus der Formel

$$f_0 = \frac{F \cdot \ell^3}{16 \cdot E \cdot I}\left(\frac{5}{24} - \frac{a^2}{\ell^2}\right)$$

berechnet. Dabei entspricht F der Anpresskraft der Andrückwalze, wobei $F = q \cdot \ell$ gilt (q : Streckenlast durch Anpresskraft). E entspricht dem Elastizitätsmodul und I dem Flächenträgheitsmoment der Andrückwalze. - Aufgrund der Bedingung, dass die Durchbiegung $f_1$ gleich der Durchbiegung $f_0$ sein soll, können die beiden obigen Ausdrücke gleichgesetzt werden und daraus kann dann der Abstand a berechnet werden. Die Wälzlager werden dann mit diesem Abstand a zu den Andrückwalzenstirnenden angeordnet.

Es liegt im Rahmen der Erfindung, dass der Abstand $a = 0{,}4025 \cdot \ell$ beträgt, wobei $\ell$ der gegenseitige Abstand der beiden Wälzlager ist. Es liegt weiterhin im Rahmen der

Erfindung, dass der Abstand $a = \dfrac{L - \ell}{2}$ beträgt, wobei L die Gesamtlänge der Andrückwalze ist und L = 1,805 · $\ell$ beträgt. Bezüglich der genauen Berechnung von a wird auf die Ausführungen weiter unten verwiesen.

Der Erfindung liegt die Erkenntnis zugrunde, dass durch die erfindungsgemäße Anordnung der Wälzlager die Durchbiegung der Andrückwalze effektiv minimiert werden kann. Versuche haben gezeigt, dass die Durchbiegung etwa nur noch 1/50 der Durchbiegung beträgt, die bei Andrückwalzen nach dem Stand der Technik auftreten kann. Mit der erfindungsgemäßen Anordnung der Wälzlager sind ballige Andrückwalzen nicht mehr erforderlich und insoweit können auch Herstellungsaufwand und Herstellungskosten minimiert werden. Ein störender Differenzialschlupf tritt bei einer erfindungsgemäßen Andrückwalze nicht mehr auf und somit können auch Unregelmäßigkeiten und Störstellen, insbesondere Längsfalten in der Werkstoffbahn vermieden werden. Im Ergebnis weist die erfindungsgemäße Vorrichtung somit gegenüber der aus dem Stand der Technik bekannten Vorrichtung beachtliche Vorteile auf.

Nachfolgend wird die Erfindung anhand einer lediglich ein Ausführungsbeispiel darstellenden Zeichnung näher erläutert. Es zeigen in schematischer Darstellung:

Fig. 1    die Verhältnisse bei einer Andrückwalze nach dem Stand der Technik,

Fig. 2    die Verhältnisse bei einer erfindungsgemäßen Andrückwalze und

Fig. 3    eine erfindungsgemäße Andrückwalze in detaillierterer Darstellung.

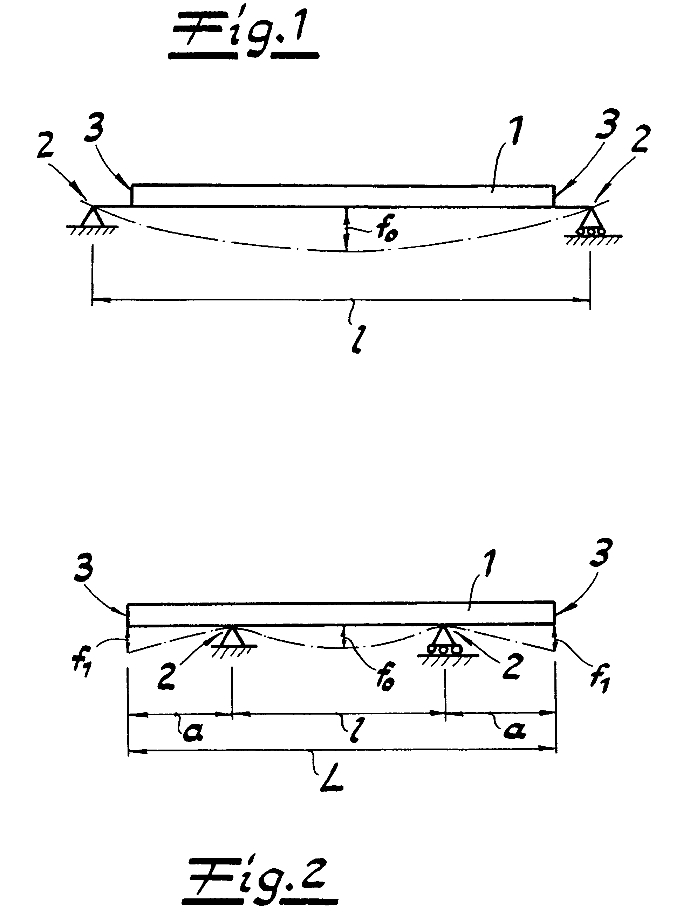

Fig. 1 zeigt die Biegungsverhältnisse bei einer Andrückwalze 1 nach dem Stand der Technik. Bei dieser Andrückwalze 1 sind die Wälzlager 2 auf den nicht näher dargestellten seitlichen Zapfen der Andrückwalze 1 angeordnet, welche Zapfen neben den Andrückwalzenstirnenden 3 angeordnet sind. Der gegenseitige Abstand der Wälzlager 2 beträgt $\ell$. Die strichpunktierte Kurve deutet die Biegelinie bei dieser aus dem Stand der Technik bekannten Andrückwalze 1 an. $f_0$ entspricht der maximalen Durchbiegung der Andrückwalze 1, die normalerweise in der Andrückwalzenmitte auftritt.

Fig. 2 zeigt ganz schematisch die Verhältnisse bei einer erfindungsgemäßen Andrückwalze 1, bei der die Wälzlager 2 zur Andrückwalzenmitte hin verschoben sind und mit einem Abstand a von den Andrückwalzenstirnenden 3 angeordnet sind. Die beiden Wälzlager 2 sind mit gleichem Abstand a von diesen Andrückwalzenstirnenden 3 angeordnet. Die Biegelinie wurde strichpunktiert gezeichnet. Die Wälzlager 2 befinden sich erfindungsgemäß an den Nullstellen dieser Biegelinie. $f_0$ entspricht wieder der Durchbiegung in der Andrückwalzenmitte und $f_1$ entspricht jeweils der Durchbiegung an den Andrückwalzenstirnenden 3. Für diese Durchbiegung $f_1$ gilt die bereits oben aufgeführte Formel:

$$f_1 = \frac{F \cdot l^3}{24 \cdot E \cdot I} \cdot \frac{a}{\ell}\left(3\frac{a^3}{\ell^3} + 6\frac{a^2}{\ell^2} - 1\right),$$

wobei F = q · $\ell$ gilt. Für die Durchbiegung $f_0$ in der Andrückwalzenmitte gilt die ebenfalls oben bereits aufgeführte Formel:

$$f_0 = \frac{F \cdot \ell^3}{16 \cdot E \cdot I}\left(\frac{5}{24} - \frac{a^2}{\ell^2}\right)$$

Erfindungsgemäß werden die beiden Wälzlager 2 an den Nullstellen der Biegelinie mit der Maßgabe angeordnet, dass die Durchbiegungen $f_1$ an den Andrückwalzenstirnenden gleich der Durchbiegung $f_0$ in der Andrückwalzenmitte ist. Folglich müssen die Ausdrücke für $f_1$ und $f_0$ gleichgesetzt werden ($f_1 = f_0$). Da auf beiden Seiten der Faktor $\dfrac{F \cdot \ell^3}{E \cdot I}$ gekürzt werden kann, verbleibt:

$$\frac{1}{24} \cdot \frac{a}{\ell}\left(3\frac{a^3}{\ell^3} + 6\frac{a^2}{\ell^2} - 1\right) = \frac{1}{16}\left(\frac{5}{24} - \frac{a^2}{\ell^2}\right)$$

Indem auf beiden Seiten mit 16 multipliziert wird, erhält man:

$$2\frac{a^4}{\ell^4} + 4\frac{a^3}{\ell^3} - \frac{2}{3} \cdot \frac{a}{\ell} = \frac{5}{24} - \frac{a^2}{\ell^2}$$

Auf beiden Seiten kann durch 2 geteilt werden und somit erhält man:

$$\frac{a^4}{\ell^4} + 2\frac{a^3}{\ell^3} + \frac{1}{2}\frac{a^2}{\ell^2} - \frac{1}{3}\frac{a}{\ell} - \frac{5}{48} = 0$$

Nach Substitution $\frac{a}{\ell}$ = x ergibt sich:

$$x^4 + 2x^3 + \frac{1}{2}x^2 - \frac{1}{3}x - \frac{5}{48} = 0$$

Die dieser Gleichung zugeordneten Nullstellen können durch Iteration ermittelt werden und man erhält für die Nullstellen:

$$x_0 = 0,4025 = \frac{a}{\ell}$$

Folglich ergibt sich für den Abstand a eines Wälzlagers 2 von dem zugeordneten Andrückwalzenstirnende 3:

$$a = 0,4025 \cdot \ell$$

wobei $\ell$ dem gegenseitigen Abstand der beiden Wälzlager 2 entspricht. Für die gesamte Andrückwalzenlänge L gilt:

$$L = 2 \cdot a + \ell$$

Folglich ergibt sich nach Einsetzen des vorgenannten Ausdruckes für a die gesamte Andrückwalzenlänge als:

$$L = 1,805 \cdot \ell$$

und für den gegenseitigen Abstand $\ell$ der beiden Wälzlager 2 erhält man:

$$\ell \;=\; \frac{L}{1,805}$$

Der Abstand eines Wälzlagers 2 von dem benachbarten Andrückwalzenstirnende 3 kann also ohne weiteres aus der Formel:

$$a = \frac{L - \ell}{2}$$

berechnet werden. Der vorstehend berechnete Abstand a hat sich als besonders vorteilhaft erwiesen. Durchbiegungen der Andrückwalze können bei diesem Abstand a besonders effektiv minimiert werden.

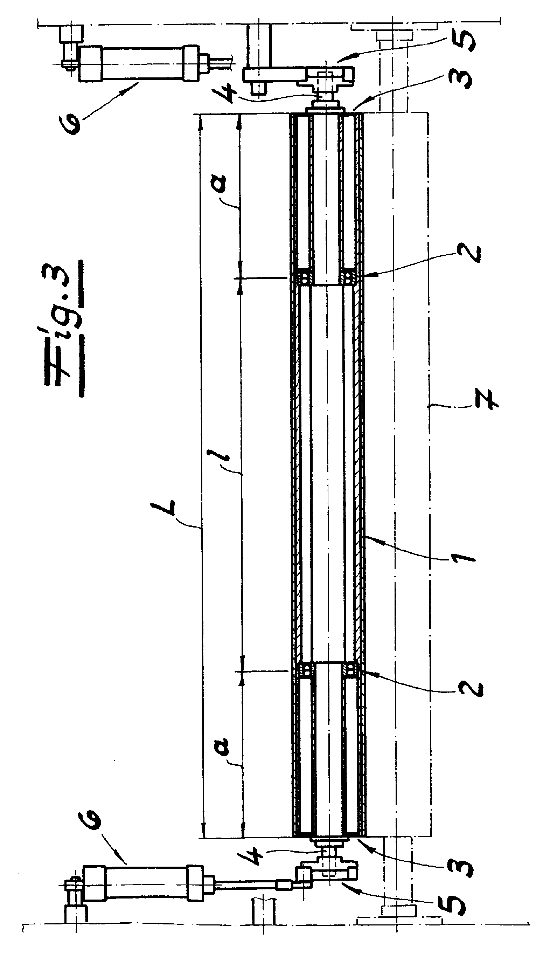

Fig. 3 zeigt die detailliertere Ausgestaltung einer erfindungsgemäßen Andrückwalze 1. Die Andrückwalze 1 ist über ihre Zapfen 4 jeweils in einer Aufnahme 5 aufgenommen, in der die Zapfen 4 zweckmäßigerweise gleitgelagert sind. Die Andrückwalze 1 kann im Übrigen mit den Stellzylindern 6 mit einer vorgegebenen Anpresskraft an die strichpunktiert dargestellte Führungswalze 7 angedrückt werden. Während die Führungswalze 7 angetrieben wird, ist die Andrückwalze 1 antriebslos ausgebildet. Die nicht dargestellte Werkstoffbahn, insbesondere Kunststofffolienbahn wird zwischen Andrückwalze 1 und Führungswalze 7 durchgeführt und aufgrund der sich drehenden Führungswalze 7 gleichsam abgezogen. Die Werkstoffbahn wird dann zweckmäßigerweise in einer geeigneten Wickelvorrichtung zu einem Wickel bzw. Coil gewickelt.

**Patentansprüche**

1. Vorrichtung zum Abzug von Werkstoffbahnen, - mit
einer angetriebenen Führungswalze (7) und einer nicht angetriebenen mit vorgegebener Anpresskraft an die Führungswalze (7) angedrückten Andrückwalze (1),
wobei die Andrückwalze (1) auf zumindest zwei Wälzlagern (2) gelagert ist,
wobei die beiden Wälzlager (2) mit gleichem Abstand (a) von den Andrückwalzenstirnenden (3) angeordnet sind,
und wobei der Abstand (a) der Wälzlager (2) zu den Andrückwalzenstirnenden (3) sich aus den Biegegleichungen für eine Andrückwalze (1) auf zwei Wälzlagern (2) unter der Bedingung ergibt, dass die Durchbiegungen $f_1$ an den Andrückwalzenstirnenden (3) gleich der Durchbiegung $f_0$ in der Andrückwalzenmitte sind.

2. Vorrichtung nach Anspruch 1, wobei sich die Durchbiegungen $f_1$ an den Andrückwalzenstirnenden (3) jeweils aus der Formel

$$f_1 = \frac{F \cdot l^3}{24 \cdot E \cdot I} \cdot \frac{a}{\ell} \left( 3\frac{a^3}{\ell^3} + 6\frac{a^2}{\ell^2} - 1 \right)$$

ergeben und sich die Durchbiegung $f_0$ in der Andrückwalzenmitte aus der Formel

$$f_0 = \frac{F \cdot \ell^3}{16 \cdot E \cdot I} \left( \frac{5}{24} - \frac{a^2}{\ell^2} \right)$$

ergibt und wobei die Wälzlager (2) mit einem Abstand (a) von den Andrückwalzenstirnenden (3) angeordnet sind, welcher Abstand (a) durch Gleichsetzen von $f_1$ und $f_0$ berechnet wird.

3. Vorrichtung nach einem der Ansprüche 1 bis 2, wobei der Abstand a = 0,4025 $\cdot$ $\ell$ beträgt, wobei $\ell$ der gegenseitige

Abstand der beiden Wälzlager (2) ist.

4. Vorrichtung nach Anspruch 3, wobei der Abstand $a = \dfrac{L - \ell}{2}$ beträgt, wobei L die Gesamtlänge der Andrückwalze (1) ist und L = 1,805 · $\ell$ beträgt.

## Claims

1. A device for withdrawing web materials having
a driven guide drum (7) and an undriven pressure drum (1) that is pressed up against the guide drum (7) by a prescribed force,
where the pressure drum (1) is carried on at least two roller bearings (2),
where each of the pair of roller bearings (2) is arranged at the same distance, a, from the respective near end (3) of the pressure drum,
and where the distance, a, of the roller bearings (2) from the respective near ends (3) of the pressure drum is given by the deflection equations for a pressure drum (1) carried on a pair of roller bearings (2), subject to the condition that the deflections, $f_1$, at the ends (3) of the pressure drum equal the deflection, $f_0$, at the center of the pressure drum.

2. A device according to claim 1, where the deflections, $f_1$, at the ends (3) of the pressure drum are given by the relation

$$f_1 = \frac{F \cdot l^3}{24 \cdot E \cdot I} \cdot \frac{a}{\ell}\left(3\frac{a^3}{\ell^3} + 6\frac{a^2}{\ell^2} - 1\right),$$

and where the deflection, $f_0$, at the center of the pressure drum is given by the relation

$$f_0 = \frac{F \cdot l^3}{24 \cdot E \cdot I}\left(\frac{5}{24} - \frac{a^2}{\ell^2}\right),$$

and where the roller bearings (2) are arranged at a distance, a, from the respective ends (3) of the pressure drum that is computed by equating $f_1$ to $f_0$.

3. A device according to claim 1 or claim 2, where the distance a is given by a = 0.4025 $\ell$, where $\ell$ is the separation of the pair of roller bearings (2).

4. A device according to claim 3, where the distance a is given by $a = \dfrac{L - l}{2}$, where L is the overall length of the pressure drum (1) and L is given by L = 1.805 · $\ell$.

## Revendications

1. Dispositif pour le retrait de bandes de matériau, avec
un cylindre de guidage (7) entraîné et un cylindre d'appui (1) non entraîné appuyé contre le cylindre de guidage (7) avec une force de pression prédéfinie,
le cylindre d'appui (1) étant disposé sur au moins deux paliers à roulement (2),
les deux paliers à roulement (2) étant disposés à égale distance (a) des extrémités frontales (3) du cylindre d'appui et la distance (a) entre les paliers à roulement (2) et les extrémités frontales (3) du cylindre d'appui est obtenue à partir des équations de flexion pour un cylindre d'appui (1) sur deux paliers à roulement (2) à la condition que les déformations $f_1$ aux extrémités frontales (3) du cylindre d'appui soient égales à la déformation $f_0$ au milieu du cylindre d'appui.

**2.** Dispositif selon la revendication 1, dans lequel les déformations $f_1$ aux extrémités frontales (3) du cylindre d'appui sont obtenues à l'aide de la formule suivante :

$$f_1 = \frac{F \cdot l^3}{24 \cdot E \cdot I} \cdot \frac{a}{\ell}\left(3\frac{a^3}{\ell^3} + 6\frac{a^2}{\ell^2} - 1\right)$$

et la déformation $f_0$ au milieu du cylindre d'appui est obtenue à l'aide de la formule suivante :

$$f_0 = \frac{F \cdot l^3}{24 \cdot E \cdot I}\left(\frac{5}{24} - \frac{a^2}{\ell^2}\right)$$

et dans lequel les paliers de roulement (2) sont disposés à une distance (a) des extrémités frontales (3) du cylindre d'appui, cette distance (a) étant calculée par égalisation de $f_1$ et $f_0$.

**3.** Dispositif selon la revendication 1 ou 2, dans lequel la distance a = 0,4025 . $\ell$, $\ell$ étant la distance entre les deux paliers de roulement (2).

**4.** Dispositif selon la revendication 3, dans lequel la distance $a = \dfrac{L - l}{2}$, $L$ étant la longueur totale du cylindre d'appui (1) et $L$ = 1,805 · $\ell$.

## $\mathcal{F}ig.1$

## $\mathcal{F}ig.2$

Fig.3

EP 1 398 288 B1